(19) Europäisches Patentamt
European Patent Office
Office européen des brevets

(11) Veröffentlichungsnummer : **0 056 576**
**B1**

(12) # EUROPÄISCHE PATENTSCHRIFT

(45) Veröffentlichungstag der Patentschrift : **28.08.85**

(51) Int. Cl.[4] : **C 08 G 18/24**, C 08 G 18/73, C 08 G 18/75

(21) Anmeldenummer : **82100039.5**

(22) Anmeldetag : **07.01.82**

(54) **Verfahren zur Herstellung von gegebenenfalls geschäumten Polyurethanen.**

(30) Priorität : **15.01.81 DE 3100977**

(43) Veröffentlichungstag der Anmeldung : **28.07.82 Patentblatt 82/30**

(45) Bekanntmachung des Hinweises auf die Patenterteilung : **28.08.85 Patentblatt 85/35**

(84) Benannte Vertragsstaaten : **BE DE FR GB IT NL SE**

(56) Entgegenhaltungen :
**DE-A- 1 595 256**
**DE-A- 2 455 289**
**Patent Abstracts of Japan, Band 1, Nr. 9, 17. März 1977, Seite 245C76**
**Chemical Abstracts Band 77, Nr. 26, 25. Dezember 1972, Columbus, Ohio, USA, O. ISHIDA et al. "Polymerization catalysts for formaldehyde", Seite 18, Spalte 2, Abstract Nr. 165320g**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Wolfskaul 10**
**D-5000 Köln 80 (DE)**
Erfinder : **Avar, Geza, Dr.**
**Bamberger Strasse 1**
**D-5090 Leverkusen 1 (DE)**
Erfinder : **Freitag, Hans-Albrecht, Dr.**
**Mülheimer Strasse 135**
**D-5060 Bergisch-Gladbach (DE)**
Erfinder : **Grögler, Gerhard, Dr.**
**von-Diergardt-Strasse 46**
**D-5090 Leverkusen (DE)**
Erfinder : **Kopp, Richard, Dr.**
**Wolfkaul 12**
**D-5000 Köln 80 (DE)**

**EP 0 056 576 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von Polyurethanen, insbesondere von Polyurethan-Schaumstofformkörpern mit kompakter Oberfläche und zelligem Kern und integraler Dichteverteilung über den Querschnitt der Formkörper (Integralschaumstoffe), unter Verwendung von speziellen Aktivatoren.

Die der Polyurethanbildung zugrundeliegende Polyadditionsreaktion zwischen Polyhydroxylverbindungen und Polyisocyanaten, insbesondere aliphatischen und alicyclischen Polyisocyanaten, bedarf, um eine für industrielle Zwecke genügend schnelle Reaktion zu erhalten, einer geeigneten Katalyse.

Es ist bekannt, hierfür Aktivatorkombinationen aus Metallverbindungen und aminischen Katalysatoren oder anderen basischen Katalysatoren zu verwenden. Beispiele für verwendete Metallverbindungen sind etwa die Biscarboxylate von Dialkylzinnverbindungen wie Di-n-butylzinn-dilaurat oder die Bismercaptide von Dialkylzinnverbindungen wie Dimethylzinn-bis(laurylmercaptid), Metallacetylacetonate wie Fe(II)-acetylacetonat, Fe(III)-acetylacetonat, Dibutylzinn(IV)-acetylacetonat, Blei-II-acetylacetonat, weiterhin Bleiverbindungen wie Blei-di-(2-ethylhexanoat) oder Wismutverbindungen wie z. B. Wismut(III)-2-ethylhexanoat.

Im allgemeinen genügt die katalytische Aktivität dieser beispielhaft genannten Metallverbindungen für industrielle Verfahren nicht. Daher werden oft basische Cokatalysatoren wie z. B. Amidine (z. B. Diazabicycloundecen, Diazabicyclononen, Dimethyltetrahydropyrimidin), Guanidine (z. B. Guanidin, Tetramethylguanidin) oder tert. Amine wie Diazabicyclooctan mitverwendet.

Die Mitverwendung dieser aminischen Cokatalysatoren bringt vielfach eine Reihe schwerwiegender Nachteile mit sich. Es hat sich z. B. gezeigt, daß mit Diazabicycloundecen (DBU) versehene Polyolkomponenten bei der Lagerung ihre Aktivität zum Teil verlieren, so daß nachkatalysiert werden muß. Man hat dies auf eine Reaktion des Diazabicycloundecens mit Wasser und Kohlendioxid, die zu einem weniger aktiven DBU-Hydrogencarbonat führt, sowie auf eine Hydrolyse der reaktiven Kohlenstoff-Stickstoff-Doppelbindung zurückgeführt. Es ist z. B. auch problematisch, chlorierte Kohlenwasserstoffe wie Dichlormethan und Katalysatoren wie z. B. Diazabicyclooctan (Triethylendiamin, DABCO®) zusammen zu lagern, da Ammoniumsalzbindung eintritt. Nachteilig bei der Verwendung dieser starken Aminbasen ist auch der für gewöhnlich üble Geruch, der besonders bei der Fertigung von Polyurethanprodukten auftritt und der — da es sich um in der Regel auch bei Raumtemperatur flüchtige Stoffe handelt — diesen Produkten noch lange anhaftet und ihren Gebrauchswert mindert.

Mit der vorliegenden Erfindung werden diese Nachteile vermieden.

Gegenstand der Erfindung ist ein Verfahren zur Herstellung von gegebenenfalls geschäumten Polyurethanen durch Umsetzung von Polyisocyanaten mit organischen Verbindungen mit mindestens zwei gegenüber Isocyanaten aktiven Wasserstoffatomen vom Molekulargewicht 400-10 000 in Gegenwart von Aktivatoren und gegebenenfalls in Gegenwart von Treibmitteln und Kettenverlängerungsmittels vom Molekulargewicht 32-400 und weiteren an sich bekannten Hilfs- und Zusatzstoffen, dadurch gekennzeichnet, daß man als Aktivatoren Verbindungen der allgemeinen Formel

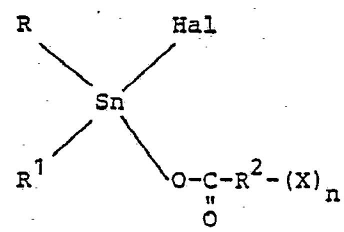

in der

R und $R^1$ gleich oder verschieden sind und $C_1$-$C_{20}$-Alkyl, $C_5$-$C_7$-Cycloalkyl oder $C_7$-$C_{30}$-Alkaryl,

Hal ein Halogenatom, vorzugsweise ein Chloratom, und

$R^2$ einen n + 1-wertigen, 1-30 C-Atome, vorzugsweise 1-20 C-Atome, aufweisenden gesättigten aliphatischen Rest, einen n + 1-wertigen, 2-18 C-Atome aufweisenden ungesättigten aliphatischen Rest, einen n + 1-wertigen, 4-7 C-Atome, aufweisenden cycloaliphatischen oder einen 6-14 C-Atome aufweisenden aromatischen Rest,

X Wasserstoff oder eine Gruppe der Formel

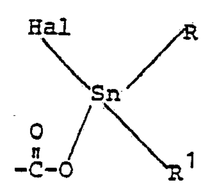

und

n eine ganze Zahl von 1-3

bedeutet, verwendet.

Erfindungsgemäß ist bevorzugt, daß Schaumstofformkörper mit kompakter Oberfläche und zelligem Kern sowie integraler Dichteverteilung über den Querschnitt der Formkörper hergestellt werden (vgl. z. B. DBP 1 694 138), und daß man vorzugsweise als Polyisocyanate aliphatische und/oder alicyclische Polyisocyanate verwendet.

Außer der Tatsache, daß nunmehr auf aminische Cokatalysatoren — die mit den obengenannten Nachteilen behaftet sind — und andere stark basische Cokatalysatoren verzichtet werden kann, bietet die Verwendung von Katalysatoren gemäß Erfindung folgende weitere Vorteile :

1. Es hat sich gezeigt, daß z. B. auf Lenkrädern oder Kopfstützen, die aus aliphatischen Polyisocyanaten und Polyhydroxylverbindungen unter Verwendung von Diazabicycloundecen als Katalysator hergestellt wurden, ein weißer Belag auftritt, der z. T. aus Diazabicycloundecen besteht und der für industrielle Zwecke sehr störend ist. Da bei Verwendung der Aktivatoren gemäß Erfindung keine Cokatalysatoren nötig sind, kann ein solcher, durch die Flüchtigkeit der verwandten aminischen Verbindungen bedingter Effekt hier nicht auftreten.

2. Es ist bekannt, daß Aminkatalysatoren auch die Spaltung von Urethanbindungen und von Etherbindungen katalysieren. Dies kann bei der alleinigen Verwendung von Katalysatoren gemäß Erfindung nicht eintreten.

3. Da nur eine katalytisch wirksame Komponente benötigt wird, brauchen keine Probleme der Aktivitätsbalance in Betracht gezogen zu werden, wie dies bei der Verwendung mehrerer Katalysatoren der Fall ist.

Die bisher im Markt angebotenen weichen, halbharten und harten Polyurethanschaumstoff-Formteile basieren in der Regel auf der Vernetzung von aromatischen Polyisocyanaten mit Polyether- bzw. Polyesterpolyolen, gegebenenfalls in Kombination mit bekannten Kettenverlängeren und Vernetzungsmitteln. Derartige Formkörper weisen ein hohes mechanisches Werteniveau auf, das sie für viele Anwendungen wie z. B. für den Möbel-, Fahrzeug- und Hausbau, bzw. von elastischen Formteilen wie Kissen, Stoßdämpfer und Schuhsohlen geeignet macht.

Ein Nachteil all dieser Formteile ist es, daß sie durch Bewitterung vergilben und zusätzlich in der Oberfläche durch chemischen Aufbau aufrauhen, so daß z. B. Formteile für erhöhte Ansprüche in der Regel mit einer schützenden Lackschicht versehen werden müssen.

Die Verfärbung von Polyurethanen unter dem Einfluß von Licht ist bekannt und tritt insbesondere dann ein, wenn aromatische Polyisocyanate verwendet werden. Deshalb sind in neuerer Zeit Versuche unternommen worden, Polyurethan-Schaumstoffe einschließlich Integralschaumstoffe aus Basis aliphatischer und/oder alicyclischer Polyisocyanate herzustellen.

Besonders vorteilhafte Eigenschaften erhält man dabei, wenn man entweder anteilig oder vollständig als Vernetzerkomponente ein Bis(2-hydroxyalkyl)amin wie z. B. Diethanolamin oder Diisopropanolamin verwendet. Dabei hat sich gezeigt, daß übliche Zinnkatalysatoren alleine oder in Kombination mit üblicherweise in der PU-Chemie verwendeten aminischen Katalysatoren keine befriedigenden Produkteigenschaften und teilweise auch eine unbefriedigende Reaktionskinetik ergeben.

Geeignete, nicht Sn-enthaltende Katalysatoren für ein solches, Bis(2-hydroxyalkyl)amin-enthaltenes System sind Bleiverbindungen, die jedoch physiologisch bedenklich sind und Wismutverbindungen, die jedoch insbesondere bei Belichtung instabil sind, so daß beide Produktklassen vermieden werden sollten.

Überraschenderweise wurde nun gefunden, daß die Aktivatoren gemäß Erfindung in der Lage sind, als effektive Katalysatoren auch in solchen PU-Systemen zu wirken, bei denen als Polyisocyanate im wesentlichen aliphatische und/oder alicyclische Polyisocyanate verwendet werden, gegebenenfalls unter Mitverwendung von Kettenverlängerern vom Molekulargewicht 32-400, wobei diese oft bevorzugt ganz oder teilweise aus Bis(2-hydroxyalkyl)aminen bestehen.

Die erfindungsgemäß zu verwendenden Aktivatoren sind an sich bekannt. So diskutieren Parker und Carman in Advances in Chem. Soc., *169,* 363 (1978) das Auftreten von Dibutylchlorozinnlaurat durch Äquilibrierung von Dibutylzinndilaurat und Dibutylzinndichlorid an Hand von $^{1}H$-NMR-Spektren. Davies und Harrison berichten in J. Chem. Soc. C, *1967,* S. 298 über die Bildung von Dibutylchlorozinnacetat bei der Vereinigung von Dibutylzinnchlorid und Dibutylzinndiacetat in Tetrachlormethan. T. N. Mitchell beschreibt in J. Organometall. Chem. *59,* 189 (1973) das $^{13}C$-NMR-Spektrum der letztgenannten Verbindung, ohne allerdings über deren Herstellung zu berichten.

Bevorzugt sind Verbindungen der genannten allgemeinen Formel, in denen R und $R^1$ $C_1$-$C_6$-Alkyl, $R^2$ $C_1$-$C_8$-Alkylen, $C_4$-$C_7$-Cycloalkylen oder $C_6$-$C_{10}$-Arylen und Hal ein Cl-Atom bedeuten und n 2 ist. Vielfach ist auch bevorzugt, daß in der allgemeinen Formel X Wasserstoff bedeutet und $n = 1$ ist.

Die Aktivatoren gemäß Erfindung werden z. B. durch Umsetzung von Dialkylzinndihalogeniden mit Carbonsäuremetallsalzen hergestellt. Diese Umsetzung wird bevorzugt in einem Lösungsmittel vorgenommen. Beispiele für geeignete Lösungsmittel sind Toluol, Xylole, 1,4-Dioxan, Dimethylformamid, Sulfolan, Dimethylsulfoxid, Dimethoxyethan. Als Diorganylzinndihalogenide werden bevorzugt Dialkylzinndichloride wie Dimethylzinndichlorid, Di-n-butylzinndichlorid, Di-n-octylzinndichlorid verwendet, Dimethylzinndichlorid ist ganz besonders bevorzugt. Als Carbonsäuremetallsalze werden bevorzugt die Salze von organischen Carbonsäuren mit Metallen der Gruppen I, II und III des periodischen Systems, ganz besonders bevorzugt solche aus der 1. Hauptgruppe, verwendet. Als Carbonsäuren seien folgende beispielhaft genannt : Essigsäure, Propionsäure, Octansäure, 2-Ethylhexansäure, Decansäure, Undecansäure, Dodecansäure, Ölsäure, Ricinolsäure, Linolsäure, Malonsäure, Bernsteinsäure, Maleinsäure, Fumarsäure, Adipinsäure, Pimelinsäure, Korksäure, Azelainsäure, Sebacinsäure, Dodekandisäure. Von den ungesättigten Carbonsäuren ist Maleinsäure am meisten bevorzugt.

Erfindungsgemäß werden folgende Aktivatoren bevorzugt eingesetzt :

Dimethylzinnmonochloracetat der Formel

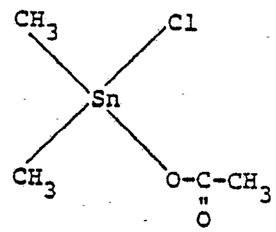

Dimethylzinnmonochloroctoat der Formel

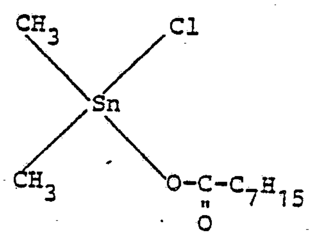

Dimethylzinnmonochlor-(2-ethyl)hexanoat der Formel

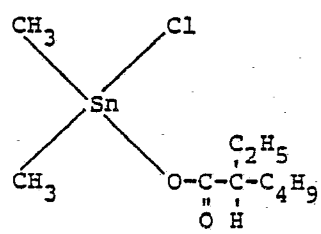

Dimethylzinnmonochlordodecanoat der Formel

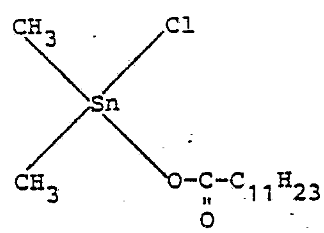

1,2-Dodecandisäure-1,12(dimethylmonochlorzinn)ester der Formel

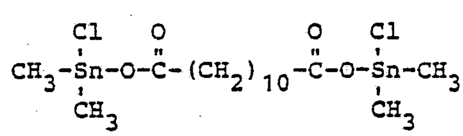

Die Aktivatoren gemäß Erfindung können im Regelfall sowohl in den Verbindungen mit mindestens zwei aktiven H-Atomen vom Molekulargewicht 400-10 000 als auch in der Isocyanatkomponente ohne Schwierigkeiten gelöst werden.

Bevorzugt werden sie unter Erwärmen in den Verbindungen mit mindestens zwei aktiven H-Atomen vom Molekulargewicht 400-10 000 gelöst, wobei überraschenderweise keine Reaktion zwischen dieser Komponente und den Aktivatoren auftritt.

Die Aktivatoren können dem Reaktionsgemisch jedoch auch in fester Form zugegeben werden. Dabei hat sich gezeigt, daß die Aktivität der dispergierten Aktivatoren von der Aktivität gelöster Aktivatoren oft nur gering unterschiedlich ist.

Die erfindungsgemäß verwendeten Aktivatoren werden üblicherweise in Mengen von 0,005-10 Gew.-

%, bezogen auf die Verbindungen mit mindestens zwei aktiven H-Atomen vom Molekulargewicht 400-10 000 eingesetzt, bevorzugt in einer Menge von 0,05-5 Gew.-%, ganz besonders bevorzugt in einer Menge von 0,1-4 Gew.-%.

Die Aktivatoren gemäß Erfindung sind im allgemeinen niedrig bis mittelhoch unzersetzt schmelzende Verbindungen.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2, und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen, bedeuten,

z. B. solche, wie sie in der DE-OS 2 916 139 auf den Seiten 16-18 beschrieben werden.

Bevorzugte Polyisocyanate sind aliphatische und alicyclische Polyisocyanate wie 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat und daraus hergestellte, durch Urethangruppen, Allophanatgruppen, Isocyanuratgruppen, Harnstoffgruppen oder Biuretgruppen modifizierte Polyisocyanate, ferner Mischtrimerisate verschiedener solcher aliphatischer und/oder alicyclischer Polyisocyanate.

2. Als Ausgangskomponenten ferner Verbindungen mit mindestens zwei gegenüber Isocyanaten reaktionsfähigen Wasserstoffatomen und einem Molekulargewicht in der Regel von 400-10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1 000 bis 8 000, vorzugsweise 1 500 bis 6 000, z. B. mindestens zwei, in der Regel 2 bis 8, vorzugsweise aber 2 bis 4, Hydroxylgruppen aufweisende Polyester, Polyether, Polythioether, Polyacetate, Polycarbonate und Polyesteramide, wie sie für die Herstellung von homogenen und von zellförmigen Polyurethanen an sich bekannt sind (vergleiche DE-OS 2 916 139, Seiten 19-26).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien solche genannt, wie sie in der DE-OS 2 916 139 auf den Seiten 27-33 beschrieben werden.

4. Gegebenenfalls als Hilfs- und Zusatzmittel:

Wasser und/oder leicht flüchtige anorganische oder organische Substanzen als Treibmittel, weitere Katalysatoren der an sich bekannten Art (in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen),

Oberflächenaktive Zusatzstoffe, wie Emulgatoren und Schaumstabilisatoren,

Reaktionsverzögerer, ferner Zellregler der an sich bekannten Art sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe. Alle diese Hilfs- und Zusatzmittel werden z. B. in der DE-OS 2 916 139 auf den Seiten 33-38 beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser

Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemäßen Verfahrens :

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter « overcharging » gearbeitet ; eine derartige Verfahrensweise ist z. B. aus den US-Patentschriften 3 178 490 und 3 182 104 bekannt.

Bei der Formverschäumung werden vielfach an sich bekannte « äußere Trennmittel », wie Siliconöle, mitverwendet. Man kann aber auch sogenannte « innere Trennmittel », gegebenenfalls im Gemisch mit äußeren Trennmitteln, verwenden, wie sie z. B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z. B. folgende Anwendung : als Schuhsohlen, Autolenkräder, Armstützen, Kopfstützen, Polstermaterial, Schalldämmstoffe, Beschichtungsmittel, Verpackungsmaterial, Matratzen.

## Beispiele

### Ausgangsverbindungen

I. Isocyanate

Isocyanat A : Semiprepolymer aus Isophorondiisocyanat und einem auf Glyzerin gestarteten Polypropylenglykolether (OH-Zahl 670) mit einem NCO-Wert von 28 %.

Isocyanat B : Prepolymer aus 1,6-Diisocyanatohexan und Dipropylenglykol mit einem NCO-Wert von 14 %.

Isocyanat C : Modifiziertes 1,6-Diisocyanatohexan, das Biureteinheiten enthälten, mit einem NCO-Wert von 21.3 %.

Isocyanat D : Semiprepolymer aus 4,4′-Diisocyanatodiphenylmethan und Tripropylenglykol mit einem NCO-Wert von 22,8 %.

Isocyanat E : Modifiziertes 1,6-Diisocyanatohexan, das Biureteinheiten enthält, mit einem NCO-Gehalt von 23 %.

Isocyanat F : Mischung aus 80 Gew.-% Toluylendiisocyanat und 20 Gew.-% polymeren 4,4′-Diisocyanatodiphenylmethan (NCO-Gehalt : 44,5 %).

II. Polyole

Polyol A : Trifunktionelles, auf Trimethylolpropan gestartetes PO/EO-Polyetherpolyol (22 Gew.-% endständ. EO) mit einer OH-Zahl von 27 und einem mittleren Molekulargewicht von 6 222.

Polyol B : Difunktionelles, auf Propylenglykol gestartetes PO/EO-Polyetherpolyol (20 Gew.-% enständ. EO) mit einer OH-Zahl von 28 und einem mittleren Molekulargewicht von 4 000.

Polyol C : Trifunktionelles, auf Trimethylolpropan gestartetes PO/EO-Polyetherpolyol (13,5 Gew.-% endständ. EO) mit einer OH-Zahl von 35 und einem mittleren Molekulargewicht von 4 500.

Polyol D : Umsetzungsprodukt von Glycerin und Propylenoxid mit einer OH-Zahl von 1 050.

Polyol E : Umsetzungsprodukt von Trimethylolpropan mit Propylenoxid mit einer OH-Zahl von 930.

Polyol F : Auf Trimethylolpropan und Propylenglykol gestartetes PO/EO-Polyetherpolyol (30 Gew.-% EO) mit einer Funktionalität von 2,78, einem mittleren Molekulargewicht von 3 700 und einer OH-Zahl von 42.

Polyol G : Trifunktionnelles, auf Trimethylolpropan gestartetes PO/EO-Polyetherpolyol mit einer OH-Zahl von 28.

Polyol H : Trifunktionnelles, mit einem oganischen Füllstoff (Polyharnstoff) modifiziertes PO/EO-Polyetherpolyol der OH-Zahl 28 (17 Gew.-% EO).

III. Katalysatoren

Katalysator A : Dimethylzinnmonochlor-(2-ethyl) hexanoat der Formel

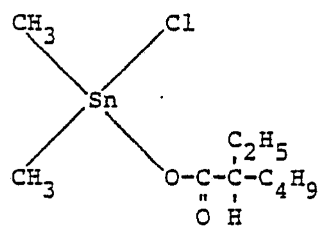

Katalysator B : Dimethylzinnmonochlordodecanoat der Formel

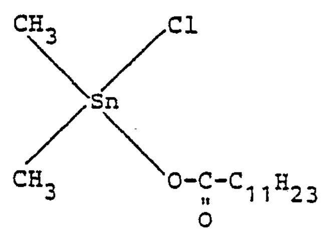

Katalysator C : Dimethylzinnmonochloracetat der Formel

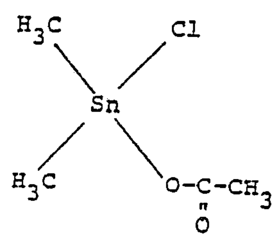

Katalysator D : Dimethylzinnmonochloroleat der Formel

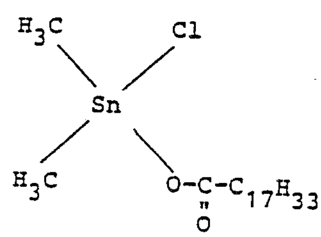

Katalysator E : Diethylzinnmonochloracetat der Formel

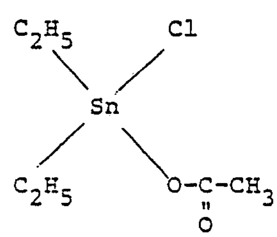

Katalysator F : Dodecandisäure-1,12-bis-(dimethylmonochlorzinn)-ester der Formel

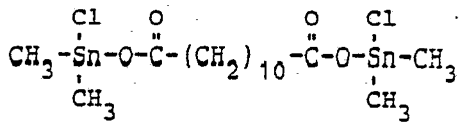

Die in den Anwendungsbeispielen aufgeführten Reaktionszeiten sind folgendermaßen definiert :

$T_1$ = Startzeit (Zeit in sec. nach der Einrührung der Isocyanatkomponente, bei der das Gemisch zu schäumen beginnt) ;

$T_2$ = Steigzeit (Zeit in sec. nach der Einrührung der Isocyanatkomponente, nach der der Steigvorgang beendet ist) ;

$T_3$ = Klebfreizeit (Zeit in sec. nach der Einrührung der Isocyanatkomponente, nach der die Oberfläche des Schaums nicht mehr klebrig ist) ;

$T_4$ = Zupfzeit (Zeit in sec. nach der Einrührung der Isocyanatkomponente, nach der es nicht mehr möglich ist, kleine Stücke mit den Fingern aus dem Schaum zu reißen).

Halbharter Polyurethan-Integralschaum auf Basis aliphatischer bzw. alicyclischer Polyisocyanate

Beispiel 1

Rezeptur :

A-Komponente :

90 g Polyol A
5 g Ethylenglykol
4 g Diethanolamin
1 g Katalysator B
12 g Trichlorfluormethan

B-Komponente :

46 g Isocyanat A

Die Bestandteile der A-Komponente werden bei Raumtemperatur zusammengegeben, mit einem hochtourigen Schnellrührer 30 sec. intensiv vermischt, mit der angegeben Menge der B-Komponente versetzt, weitere 30 sec. bei Raumtemperatur intensiv vermischt und dann in einem Freischaumpäckchen verschäumt.

Es wurde eine Startzeit von 37 ± 3 sec. und eine Abbindezeit von 130 ± 10 sec. gefunden.

Wiederholt man obigen Versuch unter Verwendung von 1 g Zinndioctoat bzw. 1 g Dibutylzinndilaurat, so bleiben die Schäume Tage klebrig und nicht abgebunden.

Beispiel 2

Rezeptur :

A-Komponente :

90 g Polyol A
5 g Ethylenglykol
4 g Diethanolamin
1 g Tinuvin 327® (Lichtschutzmittel, Handelsprodukt der Ciba-Geigy AG)
12 g Trichlorfluormethan
1 g Katalysator A

B-Komponente :

89 g Isocyanat B

Die Bestandteile der A-Komponente wurden bei Raumtemperatur zusammengegeben, mit einem hochtourigen Schnellrührer 30 sec. intensiv vermischt, mit der angegebenen Menge Isocyanat versetzt, weitere 30 sec. bei Raumtemperatur intensiv vermischt und dann in einem Freischaumpäckchen verschäumt.

Es wurde eine Starzteit von 36 ± 3 sec. und eine Abbindezeit von 89 ± 5 sec. erhalten.

Eine in einer üblichen Aluminium-Laborklappform hergestellte Integralformschaumplatte der Maße $20 \times 20 \times 1$ $cm^3$ hatte bei einem Raumgewicht von 660 $kg/m^3$ eine Shore A-Härte von 57, ließ sich gut entform und wies eine hohe Elastizität auf.

Wiederholt man obigen Versuch unter Verwendung von 1 g Zinndioctoat, so wird eine Startzeit von $60 \pm 5$ sec. und eine Abbindezeit von > 5 min. erhalten, wobei der Schaum noch lange klebrig bleibt.

Beispiel 3

Rezeptur :

A-Komponente :

169 g Polyol A
9,4 g Ethylenglykol
7,5 g Diethanolamin
1,87 g Katalysator A
20 g Trichlorfluormethan
2 g Tinuvin 327® (Lichtschutzmittel, Handelsprodukt der Ciba-Geigy AG).

B-Komponente :

119 g Isocyanat C
3 g Stabilisator (handelsüblicher Phosphit-Stabilisator).

Die Bestandteile der A-Komponente werden bei Raumtemperatur zusammengegeben, mit einem hochtourigen Schnellrührer 30 sec. intensiv vermischt, mit der angegebenen Menge B-Komponente versetzt, weitere 30 sec. bei Raumtemperatur intensiv vermischt und dann in einem Freischaumpäckchen verschäumt.

Es wurde eine Startzeit von $35 \pm 3$ sec. und eine Abbindezeit von $84 \pm 5$ sec. erhalten.

Eine mit obigem Gemisch in einer üblichen Aluminium-Laborklappform hergestellte Integralformschaumstoffplatte der Maße $20 \times 20 \times 1$ $cm^3$ hatte bei einem Raumgewicht von 665 $kg/m^3$ eine Shore A-Härte von 69, ließ sich gut entformen und wies eine hohe Elastizität auf.

Wiederholt man obigen Versuch unter Verwendung von 1 g Zinndioctoat bzw. 1 g Dibutylzinndilaurat, so bleiben die Schäume mehrere Tage klebrig und nicht abgebunden.

Beispiel 4

Rezeptur :

A-Komponente :

90 g Polyol A
5 g Ethylenglykol
4 g Diethanolamin
10 g Trichlorfluormethan
1 g Katalysator E

B-Komponente :

46 g Isocyanat A

Zur Versuchsdurchführung wird wie in Beispiel 3 vorgegangen.

Es wurde eine Startzeit von $35 \pm 3$ sec. und eine Abbindezeit von $110 \pm 10$ sec. erhalten.

Wiederholt man obigen Versuch unter Verwendung von 1 g Zinndioctoat bzw. 1 g Dibutylzinndilaurat, so bleiben die Schäume mehrere Tage klebrig und nicht abgebunden.

Halbharter Polyurethan-Integralschaum auf Basis aromatischer Polyisocyanate

Beispiel 5

Rezeptur :

A-Komponente :

70 g Polyol B
20 g Polyol C
1 g Ethylenglykol
14 g Butandiol-1,4
0,1 g Wasser
0,02 g Katalysator F
x g Triethylendiamin (DABCO®)

B-Komponente :

74 g Isocyanat D

Zur Versuchsdurchführung wird wie in Beispiel 3 vorgegangen.
Es werden folgende Zeiten erhalten :

| DABCO (g) | $T_1$ (sec±3) | $T_2$ (sec±3) | $T_3$ (sec±3) | $T_4$ (sec±3) |
|---|---|---|---|---|
| 0,3 | 21 | 42 | 58 | >3 |
| 0,6 | 16 | 33 | 48 | >3 |
| 1,2 | 13 | 22 | 33 | 55 |

Wird obiger Versuch wiederholt unter Verwendung von 0,02 g Dibutylzinndilaurat/0,3 g DABCO, so wird $T_1$ von 30 sec. und $T_4$ von 65 sec. erhalten.

Harter Polyurethan-Integralschaum auf Basis aliphatischer Isocyanate

Beispiel 6.1 (Vergleichsbeispiel)

Rezeptur :

A-Komponente :

35 g Polyol D
35 g Polyol E
30 g Polyol F
1 g Schaumstabilisator (Stabilisator der Fa. Goldschmidt, Essen auf Polysiloxan-Polyalkylenoxid-Blockcopolymer-Basis)
0,8 g Diazabicycloundecen
1,3 g Dibutylzinndilaurat
30 g Trichlorfluormethan

B-Komponente :

252,4 g Isocyanat E

Des Bestandteile der A-Komponente wurden bei Raumtemperatur zusammengegeben, mit einem hochtourigen Schnellrührer 30 sec. intensiv vermischt, mit der angegebenen Menge Isocyanat versetzt, weitere 30 sec. bei Raumtemperatur intensiv vermischt und dann in einem Freischaumpäckchen verschäumt.

Es wurde eine Startzeit von 38 ± 3 sec. und eine Abbindezeit von 47 ± 3 sec. gefunden.

Beispiele 6.2-6.5

In diesen Beispielen werden Diazabicycloundecan und Dibutylzinndilaurat durch die erfindungsgemäß zu verwendenden Katalysatoren ersetzt. Diese Beispiele verdeutlichen auch die gute Wirkung der suspendierten Katalysatoren.

(Siehe Tabelle 1, Seite 11 f.)

Tabelle 1

| Beispiel | Katalysator | Menge[a)] | Startzeit | Abbindezeit |
|---|---|---|---|---|
| 6.2 | Katalysator A | 3 g S | 46±5 | 50±5 |
| | | 3 g L | 46±5 | 48±5 |
| | | 4 g S | 43±5 | 47±5 |
| 6.3 | Katalysator B | 3 g S | 59±5 | 65±5 |
| | | 5 g S | 39±3 | 45±5 |
| 6.4 | Katalysator C | 3,7 g S | 73±5 | 78±5 |
| 6.5 | Katalysator D | 3 g S | 41±5 | 44±5 |
| | | 3 g L | 44±5 | 47±5 |

[a)] L : als Lösung in der OH-Komponente resp. als Suspension (S)

Die Versuche werden wie im Vergleichsbeispiel 6.1 beschrieben, durchgeführt.

Beispiel 6.6

Dieses Beispiel vergleicht die katalytischen Fähigkeiten einer Diazabicycloundecen/Dibutylzinndilaurat-Kombination mit einer Kombination aus Diazabicycloundecen und einem der erfindungsgemäß zu verwendenden Katalysatoren.

Verwendet man die in 6.1 angegebene Rezeptur und ersetzt Dibutylzinndilaurat durch Katalysator B, so erhält, man — bei 6.1 — analoger Versuchsdurchführungfolgende Zeiten :

| | Startzeit (sec) | Abbindezeit (sec) |
|---|---|---|
| 1 g Diazabicycloundecen<br>1 g Katalysator B | 29±3 | 44±5 |
| 1 g Diazabicycloundecen<br>1,5 g Katalysator B | 27±3 | 35±3 |

Beispiel 7

Dieses Beispiel demonstriert die Lagerstabilität von (als stellvertretendes Beispiel) Katalysator A bei Raumtemperatur.

Rezeptur :

A-Katalysator :

900 g Polyol A
50 g Ethylenglykol
40 g Diethanolamin
10 g Katalysator A

B-Komponente :

Isocyanat A

In regelmäßigen Abständen wurden 100 g der einphasigen A-Komponente mit 12 g Trichlorfluormethan und 46 g Isocyanat A versetzt, bei Raumtemperatur sorgfältig mit einem hochtourigen Schnellrührer vermischt und in einem Freischaumpäckchen verschäumt.

Es wurden folgende Daten gemessen :

| | Startzeit (sec ±5) | Abbindezeit (sec ±10) |
|---|---|---|
| 0 Tage | 47 | 165 |
| 6 Tage | 55 | 180 |
| 16 Tage | 50 | 175 |
| 34 Tage | 53 | 170 |

Heterogenreaktionen in nicht geschäumten Elastomeren

Beispiel 8

100 g eines linearen Polypropylenethers (Molekulargewicht 2 000, OH-Zahl 56) werden mit 29 g eines nach bekannten Methoden hergestellten dimeren 4,4'-Diisocyanatodiphenylmethans (Uretdiondiisocyanat ; NCO-Wert : 14,5 %) innig vermischt. Zu dieser Suspension werden jeweils 0,5 g der Katalysatoren zugesetzt und die Reaktionsmischung 4 h bei 120 °C ausgeheizt.

Man erhält Polyurethan-Elastomere mit einer Shore A-Härte von ca. 52.

Durch Zusetzen von 0,5 g Zinndioctoat an Stelle der Katalysatoren A, B, C, D, E erhält man unter diesen Reaktionsbedingungen wesentlich weichere Polyurethan-Materialien (Shore A-Härte von 30-40), was auf unvollständige Reaktion hindeutet.

Beispiel 9

Wird der im Beispiel 7 angegebene Polyether durch 100 g eines Mischpolyesters aus Adipinsäure und Ethylenglykol/Butylenglykol (Molekulargewicht 2 000, OH-Wert : 56) ersetzt, so erhält man nach Zugabe von 0,5 g der Katalysatoren A, B, C, D, E und 3-stündigem Erhitzen auf 120 °C ein elastisches Polyurethanmaterial mit einer Shore A-Härte von 60. Ohne Katalyse tritt auch nach langer Ausheizphase keine Reaktion ein und die Reaktionsmischung bleibt flüssig.

Weichschaum

Beispiel 10

Rezeptur :

A-Komponente :

80 g Polyol G
20 g Polyol H
3,1 g Wasser
1 g handelsüblicher Schaumstabilisator
0,1 g Aktivator (Niax A1 der Union Carbide Co).
0,5 g Aktivator (PU 3117 der Bayer AG)
0,2 g Katalysator D

B-Komponente :

37,1 g Isocyanat F

Ein mit obiger Rezeptur in einer Aluminium-Kastenform (Formtemperatur 50-55 °C) in an sich bekannter Weise hergestellter Formschaum wies folgende Daten auf :

| | |
|---|---|
| Startzeit : | 8 sec. |
| Fadenziehzeit : | 65 ± 5 sec. |
| Steigzeit : | 120 ± 10 sec. |
| Entformzeit : | 9 min. |

## Patentansprüche

1. Verfahren zur Herstellung von gegebenenfalls geschäumten Polyurethanen durch Umsetzung von Polyisocyanaten mit organischen Verbindungen mit mindestens zwei gegenüber Isocyanaten aktiven Wasserstoffatomen vom Molekulargewicht 400-10 000 in Gegenwart von Aktivatoren und gegebenenfalls in Gegenwart von Treibmitteln und Kettenverlängerungsmitteln vom Molekulargewicht 32-400 und weiteren an sich bekannten Hilfs- und Zusatzstoffen, dadurch gekennzeichnet, daß man als Aktivatoren Verbindungen der allgemeinen Formel

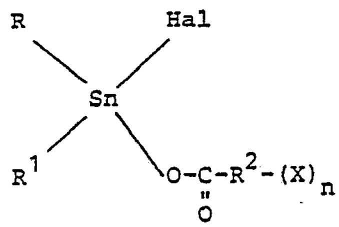

in der

R und $R^1$ gleich oder verschieden sind und $C_1$-$C_{20}$-Alkyl, $C_5$-$C_7$-Cycloalkyl oder $C_7$-$C_{30}$-Alkaryl,

Hal ein Halogenatom und

$R^2$ einen n + 1-wertigen, 1-30 C-Atome, vorzugsweise 1-20 C-Atome, aufweisenden gesättigten aliphatischen Rest, einen n + 1-wertigen, 2-18 C-Atome aufweisenden ungesättigten aliphatischen Rest, einen n + 1-wertigen, 4-7 C-Atome aufweisenden cycloaliphatischen oder einen 6-14 C-Atome aufweisenden aromatischen Rest,

X Wasserstoff oder Gruppe der Formel

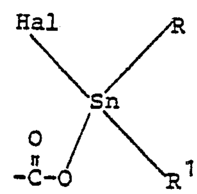

und

n eine ganze Zahl von 1-3

bedeuten, verwendet.

2. Verfahren gemäß Anspruch 1, dadurch gekennzeichnet, daß in der allgemeinen Formel Hal ein Chloratom bedeutet.

3. Verfahren gemäß Anspruch 1 und 2, dadurch gekennzeichnet, daß die Aktivatoren in einer Menge von 0,05-5 Gew.-%, bezogen auf die Verbindungen mit mindestens zwei aktiven Wasserstoffatomen vom Molekulargewicht 400-10 000, eingesetzt werden.

4. Verfahren gemäß Anspruch 1 bis 3, dadurch gekennzeichnet, daß Schaumstoffkörper mit kompakter Oberfläche und zelligem Kern sowie integraler Dichteverteilung über den Querschnitt der Formkörper hergestellt werden.

5. Verfahren gemäß Anspruch 1 bis 4, dadurch gekennzeichnet, daß als Polyisocyanate aliphatische und/oder alicyclische Polyisocyanate verwendet werden.

## Claims

1. Process for the production of optionally foamed polyurethanes by reacting polyisocyanates with organic compounds containing at least two hydrogen atoms which are active towards isocyanates and having a molecular weight of 40-10,000 in the presence of activators and optionally in the presence of blowing agents and chain-extending agents having a molecular weight of 32-400 and other auxiliaries and additives known per se, characterised in that compounds of the general formula

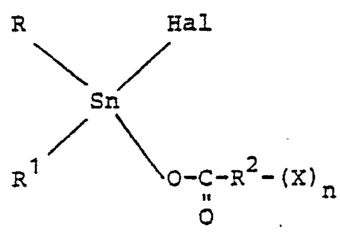

in which

R and $R^1$ are identical or different and denote $C_1$-$C_{20}$-alkyl, $C_5$-$C_7$-cycloalkyl or $C_7$-$C_{30}$-alkaryl
Hal denotes a halogen atom and
$R^2$ denotes an n + 1-functional saturated aliphatic radical containing 1-30 C atoms, preferably 1-20 C atoms, an n + 1-functional unsaturated aliphatic radical containing 2-18 C atoms, an n + 1-functional cycloaliphatic radical containing 4-7 C atoms or an aromatic radical containing 6-14 C atoms,
X denotes hydrogen or a group of the formula

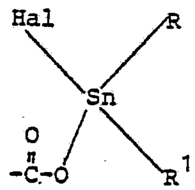

and
n denotes an integer from 1-3,
are used as activators.

2. Process according to Claim 1, characterised in that, in the general formula, Hal denotes a chlorine atom.

3. Process according to Claim 1 and 2, characterised in that the activators are used in an amount of 0.05-5 % by weight, based on the compounds containing at least two active hydrogen atoms and having a molecular weight of 400-10,000.

4. Process according to Claims 1 to 3, characterised in that foam mouldings having a compact surface and a cellular core and an integral density distribution over the cross-section of the mouldings are produced.

5. Process according to Claim 1 to 4, characterised in that aliphatic and/or alicyclic polyisocyanates are used as the polyisocyanates.

**Revendications**

1. Procédé de production de polyuréthannes éventuellement transformés en mousse par réaction de polyisocyanates avec des composés organiques ayant au moins deux atomes d'hydrogène actifs vis-à-vis d'isocyanates, de poids moléculaire égal à 400-10 000 en présence d'activateurs, et le cas échéant, en présence d'agents porogènes et d'agents d'allongement de chaîne d'un poids moléculaire de 32 à 400 et d'autres adjuvants et additifs connus, caractérisé en ce qu'on utilise comme activateurs des composés de formule générale

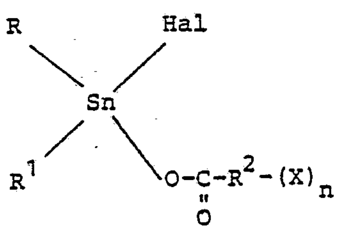

dans laquelle
R et $R^1$ sont égaux ou différents et représentent un groupe alkyle en $C_1$ à $C_{20}$, cycloalkyle en $C_5$ à $C_7$ ou alkaryle en $C_7$ à $C_{30}$,
Hal est un atome d'halogène et
$R^2$ désigne un reste aliphatique saturé de valence n + 1, comprenant 1 à 30 atomes de carbone, de préférence 1 à 20 atomes de carbone, un reste aliphatique insaturé de valence n + 1, comprenant 2 à 18 atomes de carbone, un reste de valence n + 1 cycloaliphatique présentant 4 à 7 atomes de carbone ou aromatique présentant 6 à 14 atomes de carbone,
X désigne l'hydrogène ou un groupe de formule

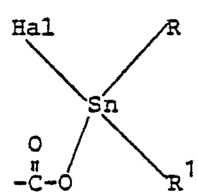

et

n est un nombre entier de 1 à 3.

2. Procédé suivant la revendication 1, caractérisé en ce que dans la formule générale, Hal désigne un atome de chlore.

3. Procédé suivant les revendications 1 et 2, caractérisé en ce que les activateurs sont utilisés en une quantité de 0,05 à 5 % en poids, par rapport aux composés ayant au moins deux atomes actifs d'hydrogène, de poids moléculaire égal à 400-10 000.

4. Procédé suivant les revendications 1 à 3, caractérisé en ce qu'on produit des pièces en mousse à surface compacte et à cœur cellulaire ainsi qu'à répartition intégrale de densité sur toute la section transversale des pièces moulées.

5. Procédé suivant les revendications 1 à 4, caractérisé en ce qu'on utilise comme polyisocyanates des polyisocyanates aliphatiques et/ou alicycliques.